# EUROPÄISCHE PATENTANMELDUNG

(11) **EP 0 568 805 A1**
(43) Veröffentlichungstag der Anmeldung: **10.11.1993**
(21) Anmeldenummer: 93104915.9
(22) Anmeldetag: 25.03.1993
(51) Int. Cl.: D06N 3/00

(54) **Verfahren zur Herstellung von hinterspritzbarem Kunstleder sowie hinterspritzbares Kunstleder**

(30) Priorität: 04.05.1992 DE 4214588
(71) Anmelder: Benecke-Kaliko Aktiengesellschaft, D-30419 Hannover (DE)
(72) Erfinder: Vollbrecht, Michael, W-3070 Nienburg (DE); Hildebrandt, Gustav, W-3262 Auetal 1 (DE); Kruse, H.-H., Dr., W-3255 Hülsede (DE); Bruder, Axel, Dr., W-3006 Burgwedel 3 (DE)
(74) Vertreter: Patentanwälte Thömen & Körner

(57) **Zusammenfassung**

Es wird ein Verfahren zur Herstellung von hinterspritzbarem Kunstleder so hinterspritzbares Kunstleder selbst beschrieben.

Das Kunstleder umfaßt eine Vliesschicht mit einer Dekorschicht. Über die der Dekorschicht abgewandten Seite der Vliesschicht wird in einem ersten Arbeitsgang ein offenes Kunststoffgerüst in die Vliesschicht eingebracht und anschließend in einem oder mehreren weiteren Arbeitsgängen ein oder mehrere weitere offene Kunststoffgerüste. Die Oberfläche der Vliesschicht bildet eine Haftfläche und gleichzeitig eine Barriere für die Spritzmasse. Die Elastizität des Kunstleders bleibt gewahrt.

## Beschreibung

Die Erfindung betrifft ein Verfahren zur Herstellung von hinterspritzbarem Kunstleder nach dem Oberbegriff des Anspruchs 1.

Kunstleder zeichnet sich durch Abriebfestigkeit, Unempfindlichkeit gegen Feuchtigkeit sowie durch weichen und geschmeidigen Materialgriff aus und eignet sich daher besonders für Kraftfahrzeuginnenausstattungen. Zur bleibenden Formgebung dient ein Trägerkörper aus Polyolefinen, Acryl-Buthadien-Styrol (ABS) oder anderen üblichen Spritzgußmassen. Indessen bereitet die Verbindung von Kunstleder, welches eine Vliesschicht mit einer Dekorschicht umfaßt, mit dem Trägerkörper erhebliche Schwierigkeiten. Wird nämlich das in eine vorbereitete Form gelegte Kunstleder hinterspritzt, so kommt es besonders im Bereich der Einspritzstellen der Form zu einer Zerstörung der Vliesschicht, die wiederum die Dekorschicht partiell einfallen läßt. Darüber hinaus führt die eindringende Spritzmasse auch zu einer unerwünschten Verhärtung der Vliesschicht, wodurch der weiche und geschmeidige Materialgriff verloren geht.

Der Erfindung liegt die Aufgabe zugrunde, ein Verfahren zur Herstellung von hinterspritzbarem Kunstleder zu schaffen, das ohne nachteilige Veränderungen der Materialeigenschaften des Kunstleders unmittelbar hinterspritzbar ist.

Diese Aufgabe wird bei einem Verfahren nach dem Oberbegriff des Anspruchs 1 durch die im kennzeichnenden Teil angegebenen Merkmale gelöst.

Durch die in mehreren Arbeitsgängen in die Vliesschicht eingebrachten Kunststoffgerüste entsteht eine haftfähige Oberfläche für die zum Hinterspritzen verwendete Spritzmasse und gleichzeitig eine Sperre, die ein zu tiefes Eindringen der Spritzmasse in die Vliesschicht verhindert. Dadurch wird erreicht, daß die Spritzmasse im Bereich der Einspritzstellen der Form, an denen ein besonders hoher Druck herrscht, nicht die bisher bekannten Zerstörungen in der Vliesschicht anrichten kann. Außerdem wird auch eine Verhärtung der Vliesschicht verhindert, da die Spritzmasse überwiegend an der Oberfläche der der Dekorschicht abgewandten Seite der Vliesschicht haftet. Das Merkmal "offen" besagt, daß das Kunststoffgerüst keine geschlossene Oberfläche bildet, sondern vielmehr die Oberfläche zahlreiche Unterbrechungen einnimmt. Dadurch wird das Kunstleder nicht durch die Kunststoffgerüste selbst unerwünscht verhärtet, sondern behält seine weiche und flexible Materialeigenschaft im wesentlichen bei.

Das Einbringen der Kunststoffgerüste in mehreren Arbeitsgängen bewirkt, daß an der Oberfläche der Vliesschicht die nötige Sperrwirkung gegen eindringende Spritzmasse erzielt werden kann, ohne daß jedoch im Inneren der Vliesschicht eine unerwünschte Dichte der Kunststoffgerüste eintritt. Die Verfestigung des Randbereichs an der der Dekorschicht abgewandten Seite der Vliesschicht beeinträchtigt hingegen die Flexibilität des Kunstleders nicht.

Gemäß einer Weiterbildung werden die Kunststoffgerüste von Arbeitsgang zu Arbeitsgang versetzt eingebracht.

Hierdurch wird es möglich, auch bei groben Gerüststrukturen eine ausreichende Bedeckung der Oberfläche und damit eine ausreichende Sperrwirkung gegen das Eindringen von Spritzmasse in die Vliesschicht zu erreichen.

Weiterhin ist vorgesehen, daß die Dichte der Struktur der Kunststoffgerüste von Arbeitsgang zu Arbeitsgang erhöht wird.

Da bei jedem weiteren Arbeitsgang die Eindringtiefe der Kunststoffgerüste abnimmt, kann eine Verdichtung der Struktur der Kunststoffgerüste, mit der auch eine Versteifung einhergeht, auf die Randschicht der Vliesschicht beschränkt werden.

Eine Weiterbildung sieht vor, daß die Kunststoffgerüste über Druckwalzen eingebracht werden, indem Vertiefungen profilierter Druckwalzen mit flüssigem Kunststoff gefüllt werden und anschließend die Druckwalzen auf der der Dekorschicht abgewandten Seite der Vliesschicht nacheinander abgerollt werden.

Es gelingt auf diese Weise, den Kunststoff zur Bildung der Kunststoffgerüste örtlich gezielt und dosiert mit gleichbleibender Fertigungsqualität in die Vliesschicht einzubringen. Dabei gestatten die nacheinander arbeitenden Druckwalzen einen kontinuierlichen Herstellungsprozess des hinterspritzbaren Kunstleders.

Eine Weiterbildung sieht vor, daß die Viskosität des flüssigen Kunststoffes von Arbeitsgang zu Arbeitsgang erhöht wird.

Durch diese Maßnahme wird erreicht, daß von Arbeitsgang zu Arbeitsgang die Eindringtiefe des Kunststoffes abnimmt, so daß sichergestellt wird, daß die Gerüststruktur ihre größte Dichte in der Randschicht der Vliesschicht erhält.

Weiterhin ist vorgesehen, daß der Andruck der Druckwalzen von Arbeitsgang zu Arbeitsgang verringert wird.

Auch durch diese Maßnahme läßt sich die Ausbildung der Kunststoffgerüste nach und nach gezielt auf die Randschichten der Vliesschicht beschränken. All diese Maßnahmen dienen somit dazu, die Haftfähigkeit für die Spritzmasse zu erhöhen, das Eindringen der Spritzmasse in die Vliesschicht und damit die Zerstörung der Vliesschicht zu verhindern und die Flexibilität und Geschmeidigkeit des Kunstleders beizubehalten.

Die Erfindung betrifft ferner ein hinterspritzbares Kunstleder nach dem Oberbegriff des Anspruchs 7.

Diesbezüglich liegt der Erfindung die Aufgabe Zugrunde, ein hinterspritzbares Kunstleder zu schaffen, welches ohne nachteilige Veränderungen seiner Eigenschaften und Oberfläche direkt hinterspritzbar ist.

Diese Aufgabe wird bei einem hinterspritzbaren Kunstleder nach dem Oberbegriff des Anspruchs 7 durch die im kennzeichnenden Teil angegebenen Merkmale gelöst.

Durch die mehrlagigen offenen Kunststoffgerüste lassen sich den einzelnen Lagen unterschiedliche Eigenschaften zuordnen. Es gelingt so, in einer an der Oberfläche liegenden Grenzschicht der Vliesschicht, eine große Haftfläche für die Spritzmasse zu schaffen und gleichzeitig eine Barriere zu bilden, die ein Eindringen der Spritzmasse in die Vliesschicht verhindert. Dagegen wird die Elastizität der Vliesschicht durch die Kunststoffgerüste selbst nur unwesentlich beeinträchtigt, so daß die vorteilhaften Materialeigenschaften, nämlich die Weichheit und Geschmeidigkeit erhalten bleiben.

In Weiterbildung der Erfindung können die Kunststoffgerüste eine unterschiedliche Eindringtiefe aufweisen.

Dadurch läßt sich erreichen, daß eine Lage der offenen Kunststoffgerüste relativ weit in die Vliesschicht hineinragt, während eine oder weitere Lagen sich an der ersten Lage abstützen und nur eine geringe Eindringtiefe besitzen. Von der der Dekorseite abgewandten Seite wirkt dieser Aufbau als eine engmaschige Gerüstfläche, die gute Haft- und gute Barriereneigenschaften gegenüber der Spritzmasse aufweist, während tiefer in der Vliesschicht nur eine relativ grobmaschige Lage des Kunststoffgerüstes vorhanden ist, das die Elastizität des Kunstleders wenig oder gar nicht beeinträchtigt.

Bei einer Weiterbildung nimmt die Dichte der Struktur der Kunststoffgerüste mit abnehmender Eindringtiefe zu.

Auch dieser Aufbau fördert die Haftfähigkeit für die Spritzmasse an der Oberfläche der Vliesschicht sowie die Barrierenwirkung, begrenzt aber den Verfestigungsbereich auf den Randbereich der Vliesschicht und beeinträchtigt daher die Elastizität des Kunstleders nicht.

Außerdem kann auch die Härte der Lagen der Kunststoffgerüste mit abnehmender Eindringtiefe zunehmen. Diese Maßnahme wirkt ebenso dahingehend, daß die tieferliegenden Vliesschichten, die die Elastizität des Kunstleders sichern, weich und verformbar bleiben.

Gemäß eine praktischen Ausgestaltung sind die Kunststoffgerüste gegenseitig versetzt.

Hierdurch läßt sich auch bei relativ grobmaschigen Kunststoffgerüsten eine insgesamt dichte Oberfläche erzielen, die die gewünschte Haftfähigkeit und Sperrwirkung für die Spritzmasse schafft.

Eine erste Alternative sieht vor, daß die Kunststoffgerüste linienförmig ausgebildet sind, wobei die Linien von Lage zu Lage unterschiedlich ausgerichtet sind.

Bei einer zweiten Alternative sind die Kunststoffgerüste netzförmig ausgebildet.

Eine dritte Alternative sieht vor, daß die Kunststoffgerüste fleckenförmig ausgebildet sind.

Außerdem ist es möglich, die unterschiedlichen Ausbildungen der Kunststoffgerüste Lage für Lage miteinander zu kombinieren, so daß alle denkbaren Kombinationen realisierbar sind.

Der Vorteil dieser Kombinationsmöglichkeit liegt darin, daß die Gerüstarten, die unterschiedliche Biege- und Dehnungseigenschaften aufweisen und unterschiedliche Sperrwirkungen erzielen, je nach Eindringtiefe des Kunststoffgerüstes in die Vliesschicht so miteinander verbunden werden können, daß eine maximale Sperr- und Haftwirkung für die Spritzmasse an der Oberfläche der Vliesschicht erzielt wird, während gleichzeitig die höchstmögliche Elastizität zur Wahrung der weichen und geschmeidigen Eigenschaften des Kunstleders erhalten bleibt.

Weiterbildungen und vorteilhafte Ausgestaltungen der Erfindung ergeben sich aus den Ansprüchen, der weiteren Beschreibung und der Zeichnung, anhand der das Verfahren sowie das hinterspritzbare Kunstleder beschrieben werden.

In der Zeichnung zeigen:
- Fig. 1: einen Querschnitt durch ein erfindungsgemäßes hinterspritzbares Kunstleder, und
- Fig. 2: eine Draufsicht auf die der Dekorschicht abgewandten Seite der Vliesschicht mit einer Darstellung der Kunststoffgerüste.

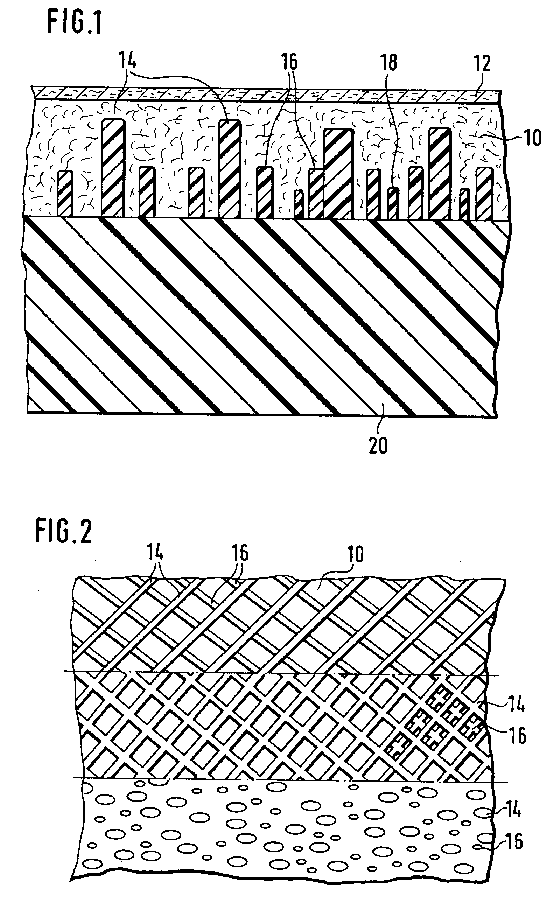

Das hinterspritzbare Kunstleder gemäß Fig. 1 zeigt eine Vliesschicht 10 mit einer Dekorschicht 12. Von der der Dekorschicht 12 abgewandten Seite der Vliesschicht 10 ragen offene Kunststoffgerüste in die Vliesschicht hinein. In dem linken Teil der Zeichnung handelt es sich um zwei Lagen der Kunststoffgerüste 14, 16, während im rechten Teil drei Lagen der Kunststoffgerüste 14, 16, 18 angeordnet sind.

Durch die offenen Kunststoffgerüste wird 14, 16, 18 erreicht, daß die Vliesschicht 10 ihre elastischen Eigenschaften beibehalten kann. Bei einer Imprägnation, die zu einer geschlossenen Fläche führen würde, wäre dies nicht der Fall.

Die Anordnung der Lagen der Kunststoffgerüste 14, 16, 18 verdeutlicht, daß die Dichte im Randbereich der Vliesschicht 10 am größten ist. Hier wird somit für die ebenfalls angedeutete Trägerschicht 20 aus Spritzmasse eine große Haftfläche erzielt und gleichzeitig eine Sperrwirkung erreicht, die ein Eindringen der unter hohem Druck eingespritzten Spritzmasse in die Vliesschicht 10 und damit deren Zerstörung verhindert. Die Verfestigung der Randschicht durch das Kunststoffgerüst ist für die elastischen Eigenschaften und die Weichheit und Geschmeidigkeit des Kunstleders praktisch ohne Bedeutung.

Die Draufsicht auf die Vliesschicht 10 gemäß Fig. 2 zeigt unterschiedliche Ausbildungen der Strukturen der offenen Kunststoffgerüste 14, 16. Im oberen Teil handelt es sich um eine linienförmige Ausbildung der Kunststoffgerüste 14, 16, wobei jedoch die Linien der beiden dargestellten Lagen unterschiedlich ausgerichtet sind, so daß sie sich in der Draufsicht kreuzen und eine Art Netz bilden.

Im mittleren Bereich sind die Kunststoffgerüste 14, 16 in jeder Lage netzförmig ausgebildet. Durch Versatz aufeinanderliegender Lagen der Kunststoffgerüste 14, 16, wie im rechten Teil der Zeichnung angedeutet, läßt sich erreichen, daß die Maschendichte des Netzes kleiner erscheint, als dies bei jeder einzelnen Lage der Fall ist.

Schließlich zeigt der untere Teil noch eine fleckenförmige Ausgestaltung der Kunststoffgerüste 14, 16. Da die Flecken nicht miteinander zusammenhängen, ist diese Variante besonders dehnbar. Auch der bedeckte Flächenanteil, der als Haft- und Sperrfläche für die Spritzmasse dient, ist hier relativ groß.

Indem die dargestellten Ausgestaltungen der Kunststoffgerüste 14, 16 über Druckwalzen auf und in die Vliesschicht nach dem Druckverfahren eingebracht werden können, gelingt eine sehr gezielte Einstellung der Eigenschaften dieses Gerüstes. Insbesondere läßt sich der Anteil der vom Gerüst bedeckten und der nicht bedeckten Fläche durch die Art der verwendeten Druckwalzen einstellen. Im Gegensatz zu anderen Verfahren kann so verhindert werden, daß eine unerwünschte geschlossene Fläche entsteht und auch daß eine zu große Eindringtiefe entsteht, die sich negativ auf die Elastizitätseigenschaften des Kunstleders auswirkt.

Mit dem beschriebenen Verfahren können also die erwünschten Eigenschaften des Kunstleders reproduziert werden, so daß bei der Produktion eine gleichbleibend hohe Qualität erlangt werden kann, während die Gefahr, das Produkt durch unbeabsichtigt falsche Dosierung der für die Gerüstherstellung verwendeten Masse zu verschlechtern, äußerst gering ist.

## Patentansprüche

1. Verfahren zur Herstellung von hinterspritzbarem Kunstleder, welches eine Vliesschicht mit einer Dekorschicht umfaßt, dadurch gekennzeichnet, daß über die der Dekorschicht abgewandten Seite der Vliesschicht in einem ersten Arbeitsgang ein offenes Kunststoffgerüst in die Vliesschicht eingebracht wird und anschließend in einem oder mehreren weiteren Arbeitsgängen ein oder mehrere weitere offene Kunststoffgerüste eingebracht werden.

2. Verfahren nach Anspruch 1, dadurch gekennzeichnet, daß die Kunststoffgerüste von Arbeitsgang zu Arbeitsgang versetzt eingebracht werden.

3. Verfahren nach Anspruch 1 oder 2, dadurch gekennzeichnet, daß die Dichte der Struktur der Kunststoffgerüste von Arbeitsgang zu Arbeitsgang erhöht wird.

4. Verfahren nach einem der Ansprüche 1 bis 3, dadurch gekennzeichnet, daß die Kunststoffgerüste über Druckwalzen eingebracht werden, indem Vertiefungen profilierter Druckwalzen mit flüssigem Kunststoff gefüllt werden und anschließend die Druckwalzen auf der der Dekorschicht abgewandten Seite der Vliesschicht nacheinander abgerollt werden.

5. Verfahren nach Anspruch 4, dadurch gekennzeichnet, daß die Viskosität des flüssigen Kunststoffes von Arbeitsgang zu Arbeitsgang erhöht wird.

6. Verfahren nach Anspruch 4 oder 5, dadurch gekennzeichnet, daß der Andruck der Druckwalzen von Arbeitsgang zu Arbeitsgang verringert wird.

7. Hinterspritzbares Kunstleder, welches eine Vliesschicht (10) mit einer Dekorschicht (12) umfaßt, dadurch gekennzeichnet, daß innerhalb der Vliesschicht (10) wenigstens zwei Lagen offener Kunststoffgerüste (14, 16) angeordnet sind, welche sich von der der Dekorschicht (12) abgewandten Seite der Vliesschicht (10) aus teilweise über den Querschnitt der Vliesschicht (10) erstrecken.

8. Hinterspritzbares Kunstleder nach Anspruch 7, dadurch gekennzeichnet, daß die Kunststoffgerüste (14, 16) eine unterschiedliche Eindringtiefe aufweisen.

9. Hinterspritzbares Kunstleder nach Anspruch 8, dadurch gekennzeichnet, daß die Dichte der Struktur der Kunststoffgerüste (14, 16) mit abnehmender Eindringtiefe zunimmt.

10. Hinterspritzbares Kunstleder nach Anspruch 7 oder 8, dadurch gekennzeichnet, daß die Härte der Lagen der Kunststoffgerüste (14, 16) mit abnehmender Eindringtiefe zunimmt.

11. Hinterspritzbares Kunstleder nach einem oder mehreren der Ansprüche 7 bis 10, dadurch gekennzeichnet, daß die Kunststoffgerüste (14, 16) gegenseitig versetzt sind.

12. Hinterspritzbares Kunstleder nach einem oder mehreren der Ansprüche 7 bis 11, dadurch gekennzeichnet, daß die Kunststoffgerüste (14, 16) linienförmig ausgebildet sind, wobei die Linien von Lage zu Lage unterschiedlich ausgerichtet sind.

13. Hinterspritzbares Kunstleder nach einem oder mehreren der Ansprüche 7 bis 11, dadurch gekennzeichnet, daß die Kunststoffgerüste (14, 16) netzförmig ausgebildet sind.

14. Hinterspritzbares Kunstleder nach einem oder mehreren der Ansprüche 7 bis 11, dadurch gekennzeichnet, daß die Kunststoffgerüste (14, 16) fleckenförmig ausgebildet sind.

15. Hinterspritzbares Kunstleder nach einem oder mehreren der Ansprüche 12 bis 14, dadurch gekennzeichnet, daß die einzelnen Lagen der Kunststoffgerüste (14, 16) eine Kombination von linienförmig und netzförmig, linienförmig und fleckenförmig, netzförmig und fleckenförmig oder linienförmig, netzförmig, und fleckenförmig ausgebildeten Kunststoffgerüsten (14, 16) bilden.
